# FASCICULE DE BREVET EUROPEEN

(11) **EP 1 678 437 B1**
(45) Date de publication et mention de la délivrance du brevet: **15.10.2008**
(21) Numéro de dépôt: 04791525.1
(22) Date de dépôt: 13.10.2004
(51) Int. Cl.: F16L 11/16

(54) **CONDUITE TUBULAIRE FLEXIBLE NOTAMMENT POUR EXPLOITATION PETROLIERE, A ENROULEMENT DE PTFE**
FLEXIBLE RÖHRENFÖRMIGE LEITUNG, DIE SICH ZUM BEISPIEL ZUR ÖLGEWINNUNG EIGNET, MIT EINER PTFE-WINDUNG
FLEXIBLE TUBULAR LINE WHICH IS SUITABLE, FOR EXAMPLE, FOR OIL EXPLOITATION, COMPRISING A PTFE COIL

(30) Priorité: 17.10.2003 FR 0312162
(43) Date de publication de la demande: 12.07.2006
(73) Titulaire: Technip France, 92400 Courbevoie (FR)
(72) Inventeur: HARDY, Jean, F-76360 Barentin (FR); COUTAREL, Alain, F-76130 Mont-Saint-Aignan (FR)
(74) Mandataire: Bertrand, Didier
(86) Numéro de dépôt international: PCT/FR2004/002612
(87) Numéro de publication internationale: WO 2005/038327

(56) Documents cités:
- EP-A- 0 817 935
- WO-A-02/066878
- WO-A-02/090818
- US-A- 4 791 966

## Description

La présente invention concerne une conduite tubulaire flexible de type non lié destinée notamment à l'industrie pétrolière offshore, par exemple au transport des hydrocarbures, et réalisée par des couches successives indépendantes constituées d'une part d'enroulements hélicoïdaux de bandes et ou de profilés divers, notamment métalliques, et d'autre part d'au moins une gaine réalisée en matériau polymère. Les différentes couches successives présentent une certaine liberté de se déplacer les unes par rapport aux autres, ce qui assure la bonne flexibilité de la conduite. Un type courant de telles conduites flexibles pétrolières comprend de l'intérieur vers l'extérieur : une carcasse interne constituée d'un enroulement hélicoïdal à pas court de profilé (généralement un feuillard métallique) en spires agrafées les unes sur les autres ; une gaine polymérique d'étanchéité interne, ou gaine de pression, s'appuyant sur la carcasse et pouvant ainsi subir des pressions externes sans risque d'écrasement; un ensemble d'armures constitué par des enroulements hélicoïdaux de profilés et destinés à résister notamment à l'effort circonférentiel (« hoop stress » en anglais) et à la composante axiale de la pression interne, ainsi qu'à la charge axiale due au poids de la conduite suspendue ; et une gaine polymérique de protection externe. L'ensemble d'armures est le plus souvent scindé en deux sous-ensembles plus particulièrement dévolus à la reprise respective des efforts radiaux et axiaux, à savoir la voûte de pression et les armures de traction : la voûte de pression est disposée au-dessus de la gaine d'étanchéité interne et destinée à résister (à la pression externe mais) principalement à la pression interne développée par le fluide dans la gaine d'étanchéité, et elle comprend généralement un enroulement en hélice à pas court (c'est-à-dire avec un angle d'enroulement par rapport à l'axe de la conduite typiquement compris entre 75° et sensiblement 90°) d'un fil de forme agrafé ; les armures de traction sont généralement des fils non agrafées disposées hélicoïdalement à pas long (c'est-à-dire inférieur à 55°) en au moins deux nappes croisées, au- " dessus de la voûte de pression. Dans certains cas, il est cependant possible d'avoir un ensemble d'armures constitué sans voûte de pression et seulement d'armures contrecroisées enroulées à 55°.

Une telle conduite, sous sa forme générale, est bien connue de l'homme du métier, notamment par les documents normatifs « Recommended practice for flexible pipe 17B » et « Specification for Unbonded Flexible Pipe 17J » de l'American Petroleum Institute.

Il est connu depuis longtemps d'utiliser dans une telle conduite des enroulements de bandes de grande longueur réalisées en divers polymères extrudables. Ces enroulements sont interposés entre diverses couches d'enroulements métalliques et/ou de gaines de la conduite dans une grande variété de fonctions techniques.

Il peut s'agir notamment de bandes de frottement ou anti-usure, prévues par le document API 17J mentionné plus haut, et illustrées par exemples dans les documents US 5 730 188 ou WO 01/33129, qui peuvent être placées sous, entre et/ou sur les différentes couches d'armures.

Il peut s'agir de bandes de confinement mécanique et de protection thermique et/ou chimique, notamment interposées entre la carcasse et la gaine d'étanchéité. En effet, la gaine d'étanchéité interne est couramment réalisée ou bien en polyamide, notamment en polyamide 11 (PA-11), tel que le RILSAN B®, ou bien en polyfluorure de vinylidène (PVDF). Dans le premier cas, la température d'utilisation est limitée car le PA-11 a une susceptibilité à l'hydrolyse qui impose une température limite en présence d'eau, fonction de la durée de vie prévue pour la conduite et de sa conception, mais qui, dans certains cas, est d'environ 90° . Dans le second cas, le PVDF est limité en températures de service, d'environ 130°C voire 120°, pour d'autres raisons (évolution de la cristallinité et susceptibilité à la propagation des fissures après vieillissement). Or des températures supérieures à 130°C sont rencontrées dans l'exploitation des hydrocarbures de gisement (« live crude » en anglais). C'est pourquoi on s'est orienté vers l'interposition d'une couche-barrière entre la carcasse et la gaine d'étanchéité interne.

Ainsi, les documents EP 0 749 546 et EP 0 817 935 font connaître une conduite flexible du type précité comportant de plus, entre la carcasse interne et la gaine d'étanchéité interne, une sous-couche en élastomère, cette sous-couche étant dans le mode de réalisation le plus général réalisée le plus souvent par extrusion. Il est cependant aussi prévu en variante des modes de réalisation dans lesquels la sous-couche est formée par une bande en élastomère enroulée hélicoïdalement le long des interstices ou déjoints de la carcasse interne et pénétrant plus ou moins profondément dans les interstices. Cette bande peut aussi être réalisée en élastomère relativement mou et être enroulée à bords jointifs pour couvrir toute la carcasse interne et s'enfoncer partiellement dans ses déjoints. L'épaisseur d'une telle couche interne supplémentaire est de l'ordre de 0,5 mm à 5 mm (de préférence 3 mm) alors que celle de la gaine polymérique est de 1 à 30 mm (de préférence 3 à 15 mm) pour un diamètre de la carcasse métallique compris entre 20 et 600 mm (de préférence entre 50 et 400 mm) et elle est prévue pour résister à des pressions internes supérieures à 100 bar, pouvant même atteindre ou dépasser 1000 bar, et d'autre part résister à des températures élevées dépassant 130 °C, voire 150 °C. Les documents précités ne détaillent pas les élastomères préférés pour la réalisation de ces bandes hélicoïdales, qui ne sont qu'un cas particulier de réalisation d'une sous-couche de la gaine d'étanchéité interne. D'une manière générale, les élastomères utilisés sont des élastomères proprement dits, normalement dans l'état vulcanisé ou réticulé, ou des thermoplastiques élastomères (TPE), choisis de sorte que certaines de leurs caractéristiques ne soient pas dégradées par la combinaison de l'action des divers composants présents dans le fluide transporté et de la température de ce fluide, au cours du vieillissement du matériau soumis à de telles conditions. Parmi les très nombreux élastomères cités, on note en particulier les élastomères thermoplastiques polyoléfiniques (TPO) et les élastomères fluorés. Il est aussi indiqué que des résultats intéressants sont obtenus avec les élastomères appartenant au groupe des silicones. Le document WO 02/090818 décrit une conduite flexible du même type avec une couche intermédiaire enroulée entre la carcasse et la gaine d'étanchéité interne. Les bandes d'enroulement peuvent former une couche de 5 à 10 mm d'épaisseur. Des exemples de matériaux utilisés sont notamment des polymères comportant 50% en volume de polyoléfines (TPO), comme dans les deux premiers documents cités, des polycétones, ou d'autre matières comme les PEX (polyéthylène réticulé), PVDF et polypropylène.

Selon le document WO 02/066878 au nom de la Demanderesse, divers constituants possibles pour la constitution d'un ruban sont donnés : le passage indique que les rubans doivent être réalisés dans des polyoléfines, des polyamides (de préférence de type polyamide 11 RILSAN ®), des polymères fluorés (homo ou copolymères), modifiés ou non (polyfluorure de vinylidène « PVDF » ou polyfluoralkoxyl) ou élastomères hydrogéno-carbonés, fluorés ou silico-fluorés (thermoplastique élastomère ou thermoplastique uréthanne). Il s'agit donc d'une liste très large de matériaux aux propriétés très diverses, mais qui visiblement ne sont pas adaptées au problème posé par la présente invention puisque les limitations de certains des matériaux recommandés dans ce document, tels que le RILSAN ® ou le PVDF, ont été déjà expliquées supra.

Quoique de nombreux matériaux aient ainsi été proposés, il reste qu'on n'a pas trouvé un matériau idéal conjuguant la possibilité d'un enroulement en bandes hélicoïdales et des qualités mécaniques et de barrière chimique et thermique efficaces.

Le but de l'invention est de proposer un tel matériau permettant la réalisation de conduites flexibles particulièrement performantes, même à hautes températures.

L'invention atteint son but grâce à une conduite tubulaire flexible notamment destinée au transport des hydrocarbures, réalisée par des couches successives indépendantes constituées d'une part d'enroulements hélicoïdaux de bandes et ou de profilés divers, et d'autre part d'au moins une gaine réalisée en matériau polymère, caractérisée en ce qu'au moins un enroulement est réalisé en bandes de polytétrafluoréthylène (PTFE).

Avantageusement, la conduite est du type connu comprenant de l'intérieur vers l'extérieur: une carcasse interne constituée d'un d'enroulement de profilé en spires agrafées les unes sur les autres ; une gaine d'étanchéité interne ; un ensemble d'armures constitué par des enroulements hélicoïdaux de profilés et une gaine polymérique de protection externe.

Selon un mode de réalisation avantageux de l'invention, ledit enroulement réalisé en bandes de PTFE constitue une couche intermédiaire disposée entre la carcasse et la gaine d'étanchéité interne.

Selon un autre mode de réalisation avantageux, ledit enroulement réalisé en bandes de PTFE constitue une couche intermédiaire disposée entre deux nappes d'armures de la conduite flexible.

Ces deux modes de réalisation peuvent naturellement se combiner,

Le choix du PTFE est très surprenant pour l'homme du métier car, si les qualités du PTFE sont reconnues depuis longtemps et rendent ce matériau désirable dans de nombreuses applications, sa mise en oeuvre est spéciale et se fait par moulage par compression et frittage, mais non pas par extrusion classique comme les polymères thermoplastiques auxquels a recours l'homme du métier habituellement dans les applications de conduites flexibles. En effet, le PTFE ne supporte pas le cisaillement qu'on rencontre dans les extrusions classiques de type vis/fourreau ou dans les extrudeuses classiques pour élastomères, généralement appelées boudineuses. La seule extrusion possible du PTFE est celle se faisant sous forme de tube ou de profilé dans des dispositifs spéciaux, notamment des systèmes cylindre/piston/filière.

Dans des domaines étrangers à l'industrie pétrolière et à la fabrication des conduites flexibles notamment, on a déjà proposé des rubanages de PTFE ; il s'agit essentiellement de l'industrie du câble électrique, comme connu par exemple par le document US 4791966. Une caractéristique de ces rubans de PTFE est d'une part d'être extrêmement minces, typiquement de l'ordre de 30 à 200 µm et d'autre part de ne pas nécessiter pour leur mise en oeuvre, dans cette application, de grandes longueur ni de raboutage en cas de casse dans la mesure où ceci est sans conséquence pour la qualité du produit fini. Il est clair que des épaisseurs aussi minces sont incompatibles avec la fabrication de conduites flexibles et écartent l'homme du métier de songer au PTFE pour cela.

Selon l'invention, il a été découvert qu'on peut néanmoins recourir au PTFE pour réaliser des enroulements hélicoïdaux de conduite pétrolière (donc avec des diamètres relativement importants, supérieurs à 15 mm et de préférence à 50 mm et pouvant atteindre 600 mm et plus) et notamment l'enroulement intermédiaire entre la carcasse et la gaine d'étanchéité interne. Ceci est rendu possible en utilisant un PTFE en bandes relativement épaisses, typiquement entre 0,5 et 5 mm d'épaisseur, produites en grande longueur.

Le PTFE en bandes de grandes longueurs est obtenu par transformation à partir de PTFE soumis à des étapes de moulage-compression, puis frittage, puis déroulage (« skiving » en anglais) et découpe longitudinale (refendage) sous forme de bandes de largeur adaptée au diamètre de l'enroulement souhaité et d'épaisseur de quelques millimètres. Les découpes sont ensuite « soudées » pour former des bandes de grande longueur.

Le PTFE utilisé est avantageusement un PTFE chimiquement modifié pour améliorer encore ses caractéristiques mécaniques, et surtout sa soudabilité, ce qui facilite la fabrication des bandes de grande longueur. Il s'agit notamment de PTFE modifié avec un comonomère perfluoré généralement utilisé dans la fabrication de perfluoropolymères thermoplastiques comme par exemple les PFA (perfluoroalkoxy) et MFA (perfluoromethoxy, copolymère de tétrafluoroéthylène et de perfluorométhyléther). Le comonomère est de préférence du PPVE (n-perfluoropropylène-vinyle-éther), typiquement la forme TFM® produit par la société Dynéon et notamment le grade 1600, avec environ 0,1% en poids de PPVE. Le faible taux de PPVE est suffisant pour permettre une mobilité interchaîne, donc un frittage ; de ce fait, le jonctionnement par « soudure » est rendu possible. Le PTFE ainsi modifié TFM® présente une pseudo-soudabilité par frittage et permet donc d'obtenir les bandes de grande longueur par raboutage d'éléments de longueurs plus petites.

D'autres caractéristiques et avantages de l'invention ressortiront de la description suivante de deux exemples de réalisation. Il sera fait référence aux dessins annexés sur lesquels :
La figure 1 est une vue partielle en perspective d'un exemple de réalisation de conduite flexible conforme à l'invention, avec un enroulement intermédiaire de bandes de PTFE entre la carcasse et la gaine d'étanchéité interne ;
La figure 2 est une vue partielle en perspective d'un autre exemple de réalisation de conduite flexible conforme à l'invention, avec un enroulement intermédiaire de bandes de PTFE entre deux couches d'armures.

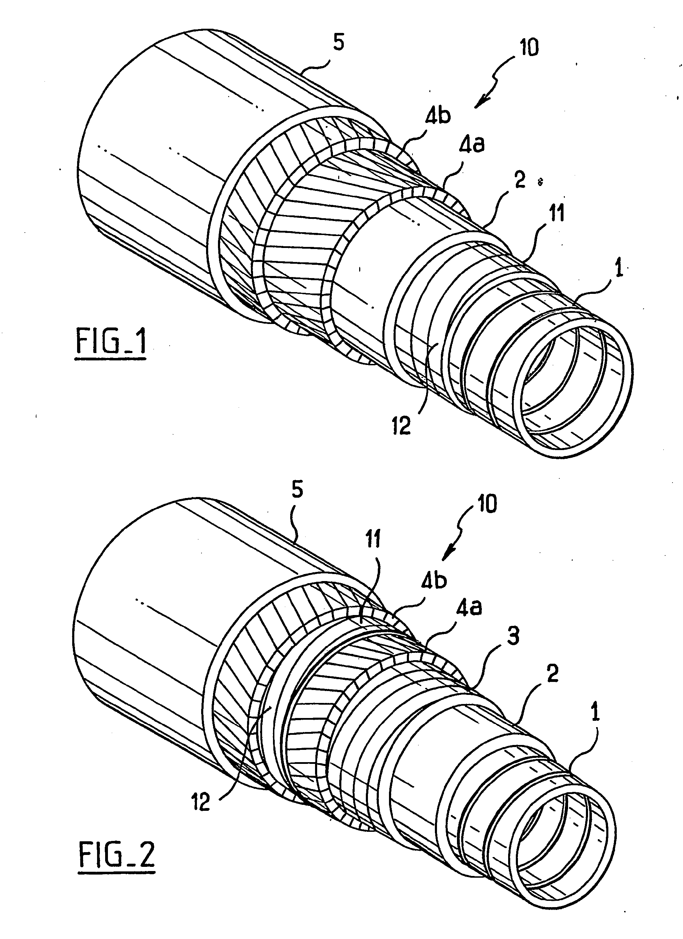

La figure 1 représente la conduite flexible 10 à passage non lisse, connue sous le nom anglais de « rough bore », comprenant la carcasse interne 1 en feuillard métallique ou en fil de forme, à spires agrafées enroulées à pas court, destinée à empêcher l'écrasement de la conduite sous pression externe ; la gaine polymérique 2 d'étanchéité interne ; un ensemble structurel d'armures ne comprenant pas de voûte de pression mais seulement des couches d'armures de traction 4a, 4b ; et la gaine polymérique de protection extérieure 5. Les nappes d'armures 4a, 4b sont enroulées en sens opposé avec un angle d'armage voisin de 55°, et les pressions interne et externe ainsi que les efforts de traction s'exercent ou sont retenus par ces nappes d'amures 4a, 4b ; la conduite flexible est dite équilibrée.

Selon l'invention, il est prévu entre la carcasse 1 et la gaine d'étanchéité interne 2 une couche intermédiaire 11 obtenue par enroulement à pas court de bandes 12 de PTFE modifié. Une telle couche intermédiaire 11 protège efficacement la gaine polymérique 2 des agressions chimiques et thermiques liées aux effluents transportés par la conduite flexible.

Ces bandes 12 de PTFE modifié présentent une largeur comprise entre 30 et 300 mm, de préférence entre 50 et 150 mm et une épaisseur comprise entre 0,5 et 5 mm, de préférence entre 1 et 2 mm. La multi-couche ainsi obtenue présente une épaisseur comprise entre 5 et 20 mm en fonction de la configuration.

La figure 2 représente la conduite flexible 10 à passage non lisse, connue sous le nom anglais de « rough bore » et comprenant la carcasse interne 1 en feuillard métallique agrafé ; la gaine polymérique 2 d'étanchéité interne ; un ensemble structurel d'armures comprenant ici la voûte de pression 3 et les couches d'armures de traction 4a, 4b ; la gaine polymérique de protection extérieure 5.

La voûte de pression 3 est réalisée par un enroulement hélicoïdal à pas court de fil de forme agrafé, par exemple en T, en Z ou en U. La voûte de pression 3 est destinée, à reprendre la composante radiale de la pression interne des effluents dans la conduite flexible.

Les armures de traction sont constituées en deux nappes croisées superposées 4a, 4b réalisées chacune par enroulement hélicoïdal à pas long de fils d'armure. L'angle d'armage mesuré sur l'axe longitudinal est typiquement inférieur à 55° quand il y a une voûte de pression 3 comme représenté en figure 2.

Conformément à l'invention, il est prévu entre les couches d'armures de traction 4a et 4b une couche intermédiaire 11 obtenue par enroulement à pas court de bandes 12 de PTFE modifié, cette couche étant par exemple destinée à réduire le frottement sous pression de contact existant entre les nappes d'armure.

On peut prévoir cette couche intermédiaire entre les nappes d'armures contrecroisées elles-mêmes, comme représenté sur la figure 1, et/ou entre des paires de telles nappes contrecroisées.

Dans l'un et l'autre mode de réalisation des figures 1 et 2, la couche intermédiaire 11 est déposée par une rubaneuse, comme connu en soi.

L'ensemble structurel d'armures peut comprendre d'autres couches non représentées, telles que des couches de frettage par enroulement, ou des couches anti-usure, ou des gaines intermédiaires, ou d'autres couches d'armures de traction.

## Revendications

1. Conduite tubulaire flexible (10) notamment destinée au transport des hydrocarbures, réalisée par ,des couches successives indépendantes constituées d'une part d'enroulements hélicoïdaux (1, 3, 4a, 4b) de bandes et ou de profilés divers, et d'autre part d'au moins une gaine (2, 5) réalisée en matériau polymère, **caractérisée en ce qu'**au moins un enroulement (11) est réalisé en bandes (12) de polytétrafluoréthylène (PTFE).

2. Conduite selon la revendications 1, **caractérisée en ce que** les bandes (12) sont réalisées en PTFE modifié avec un comonomère perfluoré.

3. Conduite selon la revendications 2, **caractérisée en ce que** les bandes (12) sont réalisées en PTFE modifié avec du PPVE (n-perfluoropropylène-vinyle-éther).

4. Conduite selon l'une quelconque des revendications 1 à 3, **caractérisée en ce que** la conduite (10) comprend de l'intérieur vers l'extérieur : une carcasse interne (1) constituée d'un d'enroulement de profilé en spires agrafées les unes sur les autres ; une gaine d'étanchéité interne (2) ; un ensemble d'armures (3, 4a, 4b) constitué par des enroulements hélicoïdaux de profilés ; et une gaine polymérique de protection externe (5).

5. Conduite selon la revendication 4, **caractérisée en ce que** l'enroulement (11) réalisé en bandes (12) de polytétrafluoréthylène (PTFE) constitue une couche intermédiaire disposée entre la carcasse (1) et la gaine d'étanchéité interne (2).

6. Conduite selon l'une quelconque des revendications 4 ou 5, **caractérisée en ce que** l'enroulement (11) réalisé en bandes (12) de polytétrafluoréthylène (PTFE) constitue une couche intermédiaire disposée entre deux nappes d'armures (4a, 4b).

7. Conduite selon l'une quelconque des revendications 1 à 6, **caractérisée en ce que** les bandes (12) de PTFE ont une épaisseur comprise entre 0,5 mm et 5 mm.

8. Conduite selon l'une quelconque des revendications 1 à 7, **caractérisée en ce que** les bandes (12) sont des bandes de grande longueur obtenues par soudage d'éléments de longueur plus petite.

## Claims

1. A flexible tubular pipe (10), especially designed for transporting hydrocarbons, produced by independent successive layers consisting, on the one hand, of helical windings (1, 3, 4a, 4b) of various profiled strips and/or tapes and, on the other hand, of at least one sheath (2, 5) made of polymer material, **characterized in that** at least one winding (11) is produced from polytetrafluoroethylene (PTFE) tapes (12).

2. The pipe as claimed in claim 1, **characterized in that** the tapes (12) are made of PTFE modified by a perfluorinated comonomer.

3. The pipe as claimed in claim 2, **characterized in that** the tapes (12) are made of PTFE modified by PPVE (perfluoro(n-propyl vinyl ether)).

4. The pipe as claimed in any one of claims 1 to 3, **characterized in that** the pipe (10) comprises, from the inside outward: an internal carcass (1) consisting of a winding of a profiled strip in mutually interlocked turns; an internal sealing sheath (2); a set of armor plies (3, 4a, 4b) consisting of helical windings of profiled strips; and a polymeric external protective sheath (5).

5. The pipe as claimed in claim 4, **characterized in that** the winding (11) produced from polytetrafluoroethylene (PTFE) tapes (12) constitutes an intermediate layer placed between the carcass (1) and the internal sealing sheath (2).

6. The pipe as claimed in either of claims 4 and 5, **characterized in that** the winding (11) produced from polytetrafluoroethylene (PTFE) tapes (12) constitutes an intermediate layer placed between two armor plies (4a, 4b).

7. The pipe as claimed in any one of claims 1 to 6, **characterized in that** the PTFE tapes (12) have a thickness of between 0.5 mm and 5 mm.

8. The pipe as claimed in any one of claims 1 to 7, **characterized in that** the tapes (12) are very long tapes obtained by welding elements of shorter length together.

## Patentansprüche

1. Rohrförmige Schlauchleitung (10), die insbesondere für den Transport von Kohlenwasserstoffverbindungen bestimmt ist, und die durch voneinander unabhängige, aufeinander ausgeführte Schichten gebildet ist, die einerseits aus spiralförmigen Wicklungen (1, 3, 4a, 4b) von Bändern mit unterschiedlichen Profilen und andererseits aus mindestens einer Hülse(2, 5) aus Polymerstoff bestehen,
**dadurch gekennzeichnet,**
**dass** mindestens eine Wicklung (11) aus Polytetrafluorethylen(PTFE)-Bändern (12) hergestellt ist.

2. Schlauchleitung nach Anspruch 1,
**dadurch gekennzeichnet,**
**dass** die Bänder (12) aus mit einem perfluoridierten Komonomer modifizierten PTFE hergestellt sind.

3. Schlauchleitung nach Anspruch 2,
**dadurch gekennzeichnet,**
**dass** die Bänder (12) aus mit PPVE (n-Perfluorpropylen-Vinylether) modifizierten PTFE hergestellt sind.

4. Schlauchleitung nach einem der Ansprüche 1 bis 3,
**dadurch gekennzeichnet,**
**dass** die Leitung (10) von innen nach außen umfasst: eine innere Karkasse (1), die aus einer Profilwicklung aus miteinander verklammerten Windungen besteht; eine innere Dichtungshülle (2); eine Gesamtanordnung von Bewehrungen (3, 4a, 4b), die von spiralförmigen Profilwicklungen gebildet ist; und eine polymerisierte äußere Schutzhülle (5).

5. Schlauchleitung nach Anspruch 4,
**dadurch gekennzeichnet,**
**dass** die aus Polytetrafluorethylen(PTFE)-Bändern (12) hergestellte Wicklung (11) eine Zwischenschicht bildet, die zwischen der Karkasse (1) und der inneren Dichtungshülle (2) angeordnet ist.

6. Schlauchleitung nach einem der Ansprüche 4 oder 5,
**dadurch gekennzeichnet,**
**dass** die aus Polytetrafluorethylen(PTFE)-Bändern (12) hergestellte Wicklung (11) eine Zwischenschicht bildet, die zwischen zwei Bewehrungsbahnen (4a, 4b) angeordnet ist.

7. Schlauchleitung nach einem der Ansprüche 1 bis 6,
**dadurch gekennzeichnet,**
**dass** die PTFE-Bänder (12) eine Stärke von 0,5 mm bis 5 mm haben.

8. Schlauchleitung nach einem der Ansprüche 1 bis 7,
**dadurch gekennzeichnet,**
**dass** die Bänder (12) Bänder von großer Länge sind, die durch Verschweißen von Elementen von geringerer Länge hergestellt werden.
